# EUROPEAN PATENT APPLICATION

(11) **EP 4 190 699 A1**
(43) Date of publication of application: **07.06.2023**
(21) Application number: 22210960.5
(22) Date of filing: 01.12.2022
(51) Int. Cl.: B64D 33/02, F02C 7/045

(54) **ATTACHMENT RING INSULATOR SYSTEMS, METHODS, AND ASSEMBLIES**

(30) Priority: 01.12.2021 US 202117539655
(71) Applicant: Rohr, Inc., Chula Vista, CA 91910-2098 (US)
(72) Inventor: SCHRELL, Johann Steven, San Diego, 92109 (US)
(74) Representative: Dehns

(57) **Abstract**

An inner barrel (230) may comprise: a perforated top sheet (320); a backskin (330); a core (310) disposed between the perforated top sheet (320) and the backskin (330); and an insulator (340) coupled to the backskin (330), the insulator (340) comprising a polymeric material.

## Description

### FIELD

The present disclosure (invention) relates generally to attenuation structures for reducing acoustic noise and, more particularly, to inner barrels for reducing noise generated within engines or propulsion systems.

### BACKGROUND

Some fan compartments for gas turbine engines may include fire zones. In this regard, an inlet aft bulkhead and an attachment ring may define a fire barrier. Attachment rings may be made of metal, or metal alloys. Thus, the attachment rings may withstand heat, but also conduct heat to various components. An inner barrel of a fan compartment may be constructed of composite materials and have a limited temperature exposure threshold (e.g., 350 deg F). Current methods for thermally protecting the inner barrel and the attachment ring include heat blankets, coatings, and/or shields, which are typically heavy, costly, and/or include maintainability burdens.

### SUMMARY

According to an aspect of the present invention there is disclosed an inner barrel comprising: a perforated top sheet; a backskin; a core disposed between the perforated top sheet and the backskin; and an insulator coupled to the backskin, the insulator comprising a polymeric material.

Optionally, the insulator comprises one of ethylene propylene diene monomer (EPDM), neoprene, styrene butadiene rubber (SBR), natural rubber, urethane rubber, and silicone rubber. The inner barrel may further comprise an adhesive disposed between the insulator and the backskin. The insulator may comprise a hardness of at least Shore A 70. A nacelle may comprise the inner barrel.

According to an aspect of the present invention there is disclosed herein a nacelle inlet comprising: an inner barrel at least partially defining a flow path on a radially inner surface, the inner barrel comprising an insulator disposed radially outward from the radially inner surface; and an attachment ring coupled to the inner barrel, the attachment ring disposed adjacent to, and in contact with the insulator.

The insulator may comprise a hardened polymeric material. The hardened polymeric material may comprise a hardness between Shore A 70 and Shore A 100. The inner barrel may comprise a backskin, a perforated top sheet, and a core disposed between the backskin and the perforated top sheet. The perforated top sheet may define the radially inner surface of the inner barrel. The insulator may be coupled to the backskin. The nacelle inlet may further comprise an adhesive disposed between the backskin and the insulator. The insulator may be configured to reduce heat propagation from an interior cowl cavity radially inward from the attachment ring during a fire event within the nacelle inlet.

According to an aspect of the present invention there is disclosed a method of manufacture for an inner barrel of a nacelle, e.g. as described above. The method of manufacture comprises: laying up an elastomeric material on a backskin of an inner barrel to form a pre-cure assembly; heating the pre-cure assembly; and pressurizing the pre-cure assembly to cure the pre-cure assembly and harden the elastomeric material.

Optionally, pressurizing the pre-cure assembly forms a hardened polymeric material on the backskin of the inner barrel. The method may further comprise: laying up a perforated top sheet; laying up a core with an adhesive on the perforated top sheet; and laying up the backskin prior to laying up the elastomeric material. Pressurizing the pre-cure assembly may further comprise curing the pre-cure assembly with a mold having a contour of the inner barrel. The mold may form a contour for an insulator defining a radially outer surface of the inner barrel. The method may further comprise coupling an attachment ring to the radially outer surface. The elastomeric material may comprise one of ethylene propylene diene monomer (EPDM), neoprene, styrene butadiene rubber (SBR), natural rubber, urethane rubber, and silicone rubber.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic representation of a gas turbine engine used as a propulsion system on an aircraft, in accordance with various embodiments.
FIG. 2 illustrates a cross-sectional view of a nacelle inlet inner barrel, in accordance with various embodiments.
FIG. 3 illustrates a cross-sectional detail view of an inner barrel, in accordance with various embodiments.
FIG. 4A, 4B, and 4C illustrate a manufacturing process for the inner barrel, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

As used herein, "outboard" may define an element or portion of an element that is situated radially outer to or away from another, radially inward, element or portion of an element. Thus, an engine core may be situated radially inboard of an inner fixed structure ("IFS") and/or a fan casing, as described herein. As used herein, "inboard" may define the element or portion of the element that is situated radially inward in relation to an outboard element.

Insulator systems disclosed herein may allow a larger design space for the aft portion of an inlet of a nacelle. Insulator systems disclosed herein may reduce weight by removing extra heat blankets, fire/radiation shields, coatings, or the like. Insulator systems disclosed herein may also be applicable for heat conduction sensitive joints in a gas turbine engine, such as a bumper connection to the IFS composite panels.

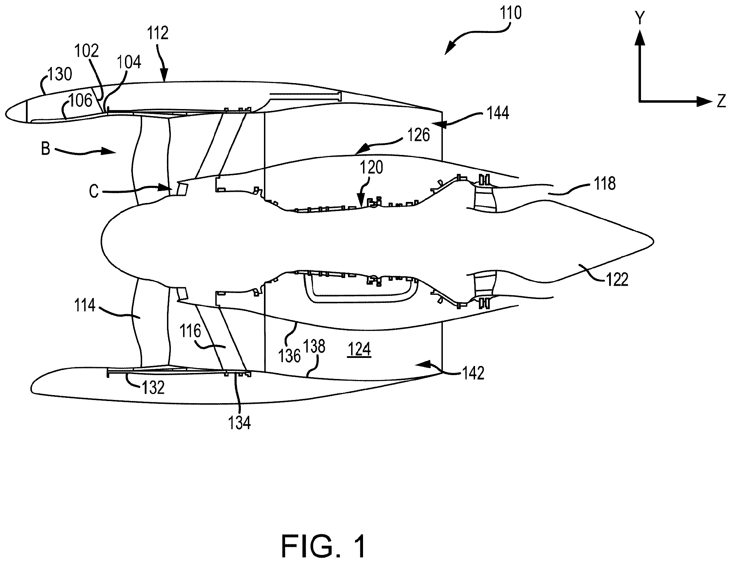

According to various embodiments, FIG. 1 illustrates a schematic sectional view of a gas turbine engine. Gas turbine engine 110 may include core engine 120. Core air flow C flows through core engine 120 and is expelled through exhaust outlet 118 surrounding exhaust centerbody 122.

Core engine 120 drives a fan 114 arranged in a bypass flow path 124. Bypass air flow B, driven by the fan 114, flows in the aft direction through bypass flow path 124. At least a portion of bypass flow path 124 may be defined by nacelle structure 112 and inner fixed structure (IFS) 126. As is known, the general shape of IFS 126 is a surface of revolution around the engine axis, often with two bifurcation panels at the six o'clock and the twelve o'clock position which extend radially outward, and the IFS 126 is often made from two generally mirror image halves that hinge together as part of the thrust reverser structure. The radially outboard surface of IFS 126 may be referred to as an inner flow surface 136 of the bypass flow path 124, and the radially inboard surface of nacelle structure 112 may be referred to as an outer flow surface 138 of the bypass flow path 124. Fan case 132 may surround fan 114. Fan case 132 may be housed within nacelle structure 112.

In various embodiments, an intermediate case (IMC) 134 of the gas turbine engine 110 may be provided radially inward of fan case 132. Fan case 132 may provide a mounting structure for securing gas turbine engine 110 to a pylon. IMC 134 may be surrounded by nacelle structure 112. According to various embodiments, multiple guide vanes 116 may extend radially between fan case 132 and IMC 134. Core engine 120 may be secured to fan case 132 at IMC 134.

In various embodiments, a nacelle inlet 130 of the nacelle structure 112 may be provided axially forward of the fan case 132. Nacelle inlet 130 may comprise an aft bulkhead 102 and an attachment ring 104 coupled to the aft bulkhead 102 whereby nacelle inlet 130 is coupled to fan case 132. An inner barrel 106 may be coupled to attachment ring 104. Inner barrel 106 may at least partially define bypass flow path B.

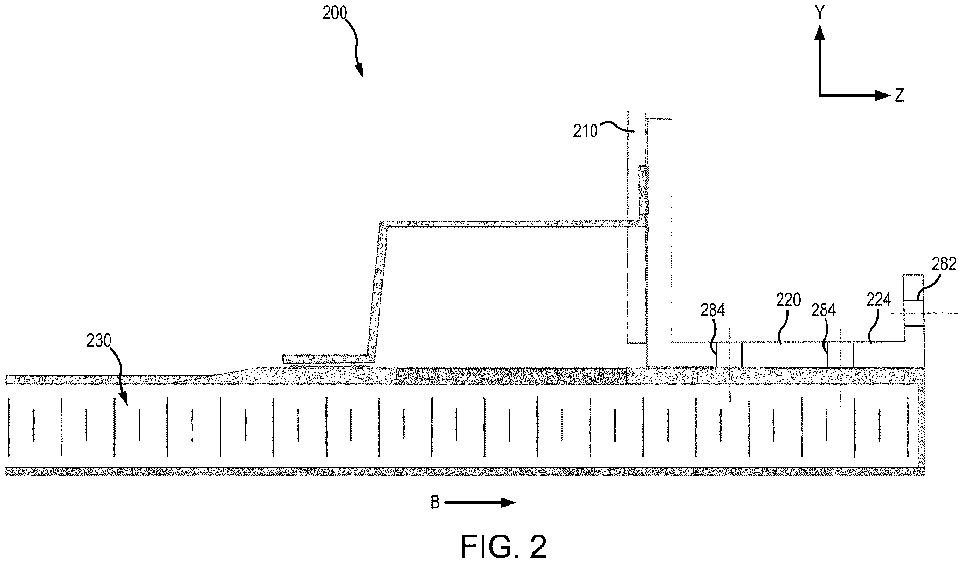

According to various embodiments, FIG. 2 illustrates a sectional view of a nacelle inlet 200, in accordance with various embodiments. In various embodiments, nacelle inlet 200 is similar to nacelle inlet 130 of FIG. 1. Nacelle inlet 200 may comprise an aft bulkhead 210 and an attachment ring 220 coupled to the aft bulkhead 210. In various embodiments, attachment ring 220 may be attached to aft bulkhead 210 via a plurality of attachment features, such as bolts, rivets, or the like. Attachment ring 220 may be configured for coupling nacelle inlet 200 to an adjacent fan case. In various embodiments, attachment ring 220 may comprise a first plurality of apertures 282 disposed therein whereby a plurality of fasteners - e.g., bolts - may secure attachment ring 220 to a fan case. In this regard, attachment ring 220 may be configured to attach nacelle inlet 200 to a fan case. Attachment ring 220 may be made from a metal or metal alloy material.

In various embodiments, nacelle inlet 200 comprises an inner barrel 230 (i.e., an inner barrel). Inner barrel 230 may be coupled to attachment ring 220. Attachment ring 220 may comprise a second plurality of apertures 284 disposed therein whereby a plurality of fasteners - e.g., bolts, rivets, or the like - may secure inner barrel 230 to attachment ring 220. Mechanical loads may be transferred between inner barrel 230 and attachment ring 220, via the plurality of fasteners at second plurality of apertures 284. Inner barrel 230 may be acoustically treated in a single degree of freedom (SDOF), double degree of freedom (DDOF), or other acceptable arrangement.

In various embodiments, the inner barrel 230 comprises an insulator as described further herein. In this regard, the inner barrel 230 is configured to at least partially thermally insulate the attachment ring 220 and/or the aft bulkhead 210 from a high heat source - e.g., fire, bleed air, or the like - internal to the cowl, radially outward from the inner barrel.

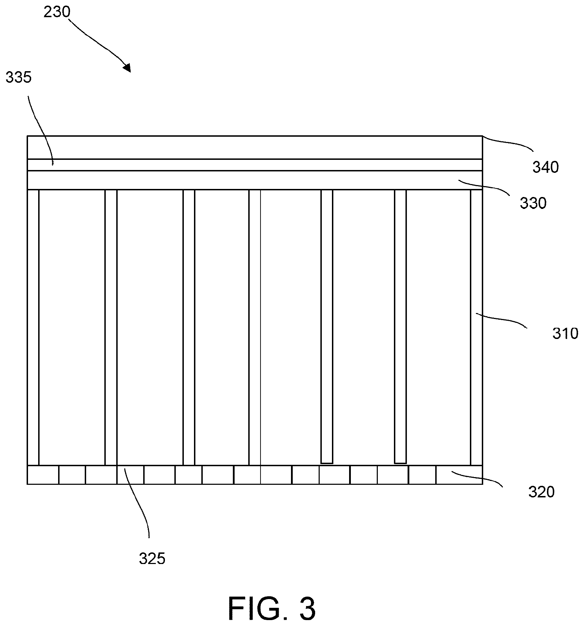

Referring to FIG. 3, a cross-section view of the inner barrel 230 is illustrated according to various embodiments. In various embodiments, the inner barrel 230 may comprise a perforated top sheet 320, a core 310, and a backskin 330. The perforated top sheet 320 may comprise perforations 325. The inner barrel 300 may further comprise an insulator 340 coupled to the backskin 330. In various embodiments, the insulator 340 includes a thermal conductivity between 0 and 2.5 W/mK, or between 0 and 1 W/mK, or between 0 and 0.5 W/mK. In various embodiments, the insulator 340 has a thermal conductivity that is less than the backskin 330. In various embodiments, the thermal conductivity of the insulator 340 is at least 50% less than the backskin 330. In various embodiments, the thermal conductivity of the insulator 340 is at least 75% less than the backskin 330. In various embodiments, the insulator 340 may comprise a polymeric material, such as a hardened polymeric material. For example, the insulator 340 may comprise ethylene propylene diene monomer ("EPDM), neoprene (chloroprene), styrene butadiene rubber ("SBR"), natural rubber, urethane rubber, silicone rubber, or the like. In various embodiments, the insulator 340 may further comprise an additive filler, such as carbon black, silica, heat resistant synthetic fibers, such as those sold under the trademark Kevlar^{®} by DuPont in Wilmington, DE, carbon fiber, nanoclay, or the like. In this regard, the insulator 340 may be sized and configured for desired properties of hardness, modulus, elongation at break, tensile strength, thermal conductivity, or the like. In various embodiments, the insulator 340 is coupled to the backskin via an adhesive 335 or the like.

Referring now to FIGs. 2 and 3, the insulator 340 may be disposed adjacent to, and in contact with, the attachment ring 220. In this regard, the insulator 340 may limit heat from a fire event in the nacelle inlet 200 from being conducted via the attachment ring 220 inbound to various other components. In this regard, the inner barrel 230 may remain relatively cool during a fire event in the nacelle inlet to prevent the heat from propagating to connecting structures.

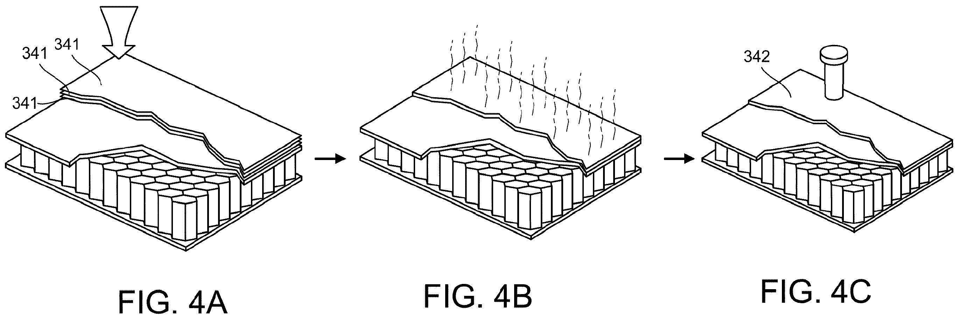

In various embodiments, the insulator 340 may be coupled to the backskin 330 during the manufacturing process of the inner barrel 230. For example, the insulator 340 being coupled to the backskin 330 during a manufacturing process of the inner barrel 230 is illustrated in FIGs. 4A-C. In various embodiments, prior to FIG. 4A, the perforated top sheet 320 may be manufactured by any method known in the art, an unsupported adhesive and the core 310 may be laid up against the perforated top sheet 320, a supported adhesive, a pre-cured backskin, and pre-cured backskin splices are utilized to form the backskin 330 or layup an entire backskin in a co-curing configuration.

Referring now to FIG. 3 and FIGs. 4A-C, the process further comprises disposing the adhesive 335 on the backskin 330. The adhesive 335 may be laid up on the backskin 330, in accordance with various embodiments. The process further comprises laying up a polymeric material, such as ethylene propylene diene monomer ("EPDM), neoprene (chloroprene), styrene butadiene rubber ("SBR"), natural rubber, urethane rubber, silicone rubber, or the like on the adhesive 335. In various embodiments, the polymeric material may be in a softened state when laying up. "Softened state" as described herein refers to a pre-cured state of the polymeric material (i.e., prior to being hardened). In this regard, the polymeric material may be moldable to a contour of the backskin 330 of the inner barrel 230. In various embodiments, laying up the polymeric material may include laying up and calendaring (i.e., smoothing and compressing) elastomeric layers 341. Although illustrated as including multiple elastomeric layers 341, the present disclosure is not limited in this regard. For example, a single elastomeric layer 341 may be utilized, in accordance with various embodiments.

In various embodiments, the process further comprises curing the assembly (as shown in FIG. 4B) and machining the hardened polymeric material 342 to form the inner barrel 230 (as shown in FIG. 3). Curing the assembly in FIG. 4B can vulcanize / cure the elastomeric layers 341 from FIG. 4A into a hardened state. In various embodiments, the cure parameters can be varied depending on the elastomer and a desired durometer / hardness of the cured insulator 340 from FIG. 3. The cure cycle causes the elastomeric layers 341 from FIG. 4A to shrink; thus, a thickness of the elastomeric layers 341 from FIG. 4A may be greater than a final thickness of the insulator 340 from FIG. 3 formed from the process shown in FIGs. 4A-C. In various embodiments, the cure cycle may comprise applying pressure to the assembly shown in FIG. 4B and heating the assembly shown in FIG. 4B to a curing temperature between 300 °F (149 °C) and 400 °F (204 °C), or approximately 350 °F (177 °C). In various embodiments, the curing process may cure the entire assembly resulting in a unitary inner barrel 230 as shown in FIG. 3. In various embodiments, after the curing cycle, a post cure may be desirable to obtain a desired insulator durometer hardness. However, the present disclosure is not limited in this regard.

In various embodiments, the machining step in FIG. 4C may be replaced by utilizing a net shape cure tool on an external surface of the elastomeric layers 341 from FIG. 4A. In this regard, the curing process of FIG. 4B may allow the cure pressure to force the elastomeric layers 341 into the net shape of the tool to form a contour corresponding to a desired outer contour for the inner barrel 230 from FIG. 3. In this regard, machining may be eliminated, or significantly reduced. For example, flash and trim may be removed via machining after curing utilizing the net shape cure tool described above, in accordance with various embodiments.

In various embodiments, the hardness for the insulator 340 from FIG. 3 may be between Shore A 70 and Shore A 100, or between Shore A 80 and Shore A 100, or the like.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An inner barrel (106; 230), comprising:
a perforated top sheet (320);
a backskin (330);
a core (310) disposed between the perforated top sheet (320) and the backskin (330); and
an insulator (340) coupled to the backskin (330), the insulator (340) comprising a polymeric material.

2. The inner barrel (106; 230) of claim 1, wherein the insulator (340) comprises:
one of ethylene propylene diene monomer (EPDM), neoprene, styrene butadiene rubber (SBR), natural rubber, urethane rubber, and silicone rubber; and/or
a hardness of at least Shore A 70.

3. The inner barrel (106; 230) of claim 1 or 2, further comprising an adhesive (335) disposed between the insulator (340) and the backskin (330).

4. A nacelle comprising the inner barrel (106;230) of any preceding claim.

5. A nacelle inlet (130; 200), comprising:
an inner barrel (106; 230) at least partially defining a flow path on a radially inner surface, the inner barrel (106; 230) comprising an insulator (340) disposed radially outward from the radially inner surface; and
an attachment ring (104; 220) coupled to the inner barrel (106; 230), the attachment ring (104; 220) disposed adjacent to, and in contact with the insulator (340).

6. The nacelle inlet (130; 200) of claim 5, wherein the insulator (340) comprises a hardened polymeric material (342),
wherein the hardened polymeric material (342) optionally comprises a hardness of at least Shore A 70.

7. The nacelle inlet (130; 200) of claims 5 or 6, wherein the inner barrel (106; 230) comprises a backskin (330), a perforated top sheet (320), and a core (310) disposed between the backskin (330) and the perforated top sheet (320),
wherein the perforated top sheet (320) optionally defines the radially inner surface of the inner barrel (106; 230).

8. The nacelle inlet (130; 200) of claim 7, wherein the insulator (340) is coupled to the backskin (330),
wherein the nacelle inlet optionally further comprises an adhesive (335) disposed between the backskin (330) and the insulator (340).

9. The nacelle inlet (130; 200) of claims 5 to 8, wherein the insulator (340) is configured to reduce heat propagation from an interior cowl cavity radially inward from the attachment ring (104; 220) during a fire event within the nacelle inlet (130; 200).

10. A method of manufacture for an inner barrel (106; 230) of a nacelle, comprising:
laying up an elastomeric material on a backskin (330) of an inner barrel (106; 230) to form a pre-cure assembly;
heating the pre-cure assembly; and
pressurizing the pre-cure assembly to cure the pre-cure assembly and harden the elastomeric material.

11. The method of claim 10, wherein pressurizing the pre-cure assembly forms a hardened polymeric material (342) on the backskin (330) of the inner barrel (106; 230).

12. The method of claims 10 or 11, further comprising:
laying up a perforated top sheet (320);
laying up a core (310) with an adhesive (335) on the perforated top sheet (320); and
laying up the backskin (330) prior to laying up the elastomeric material.

13. The method of any of claims 10 to 12, wherein:
pressurizing the pre-cure assembly further comprises curing the pre-cure assembly with a mold having a contour of the inner barrel (106; 230); and/or
the elastomeric material comprises one of ethylene propylene diene monomer (EPDM), neoprene, styrene butadiene rubber (SBR), natural rubber, urethane rubber, and silicone rubber.

14. The method of claim 13, wherein the mold forms a contour for an insulator (340) defining a radially outer surface of the inner barrel (106; 230).

15. The method of claim 14, further comprising coupling an attachment ring (104; 220) to the radially outer surface.
